Europäisches Patentamt

European Patent Office

Office européen des brevets

(11) Veröffentlichungsnummer: **0 370 400**
**A2**

(12) ## EUROPÄISCHE PATENTANMELDUNG

(21) Anmeldenummer: **89121282.1**

(22) Anmeldetag: **17.11.89**

(51) Int. Cl.5: **A47G 19/12**

(30) Priorität: **22.11.88 US 274818**

(43) Veröffentlichungstag der Anmeldung:
**30.05.90 Patentblatt 90/22**

(84) Benannte Vertragsstaaten:
**AT BE CH DE ES FR GB GR IT LI LU NL SE**

(71) Anmelder: **Melitta-Werke Bentz & Sohn**
**Ringstrasse 99**
**D-4950 Minden 1(DE)**

(72) Erfinder: **Brindöpke, Dieter**
**Wallfahrtsteich 8**
**D-4950 Minden(DE)**

(74) Vertreter: **Stracke, Alexander, Dipl.-Ing. et al**
**Patentanwälte Dipl.-Ing. Loesenbeck**
**Dipl.-Ing. Stracke Jöllenbecker Strasse 164**
**Postfach 5605**
**D-4800 Bielefeld 1(DE)**

(54) **Karaffe und Verfahren zur Herstellung einer Karaffe.**

(57) Beschrieben wird eine Karaffe mit Griff, bestehend aus einem Glasbehälter mit einem Halsteil mit einer nach oben weisenden Kante, die eine Öffnung des Glasbehälters ausbildet. Der Handgriff hat einen Ring mit einem Aufnahmeraum, in dem lose die Kante des Glasbehälters aufgenommen ist. Mehrere Befestigungsmittel sind fest in den Aufnahmeraum des Handgriffs aufgenommen und legen sich an die Kante des Glasbehälters an und verbinden dadurch den Handgriff mit dem Glasbehälter rings um dessen Öffnung. Flexibles Dichtmaterial ist in den Aufnahmeraum des Handgriffs aufgenommen und dichtet den Handgriff am Glasbehälter ab. Die Befestigungsmittel weisen mehrere Federklammern auf, die voneinander beabstandet rings um die Öffnung des Glasbehälters angeordnet sind, wobei jede Federklammer aus einem im wesentlichen V-förmig gebogenen Metallstreifen besteht, dessen Füße über einen gerundeten Mittelteil miteinander verbunden sind, der über die obere Kante des Glasbehälters gelegt und dort befestigt ist. Die Füße erstrecken sich dann zu beiden Seiten der Kante. Der Aufnahmeraum des Handgriffs hat einander gegenüberliegende Flächen oder Wände und jeder Fuß der Federklammern legt sich an jeweils einer dieser Wände an und befestigt dadurch die Federklammer und den Handgriff am Glasbehälter.

FIG. 3

## Karaffe und Verfahren zur Herstellung einer Karaffe

Die Erfindung betrifft eine Karaffe mit einem mit ihr verbundenen Handgriff, insbesondere eine Karaffe mit einem Glasbehälter, an dem ein Handgriff zum Ausgießen befestigt ist, und zwar über mehrere Befestigungsmittel, die in einem Aufnahmeraum des Handgriffs befestigt sind und auch an einer nach oben weisenden Kante des Halsteils des Glasbehälters.

Bekannte Karaffen bestehen aus einem Glasbehälter oder Glasgefäß, mit dem ein Handgriff unter Verwendung eines Metallbandes verbunden ist, über das der Handgriff mit dem Halsteil des Glasbehälters verbunden wird. Diese Konstruktion muß die thermischen Längenänderungen des Bandes und des Glasbehälters beim Erwärmen der Karaffe und ihres Inhaltes berücksichtigen. Diese bekannte Konstruktion ist schwierig zu montieren. Bei einer anderen Ausführungsform wird eine Karaffe beschrieben, bei der der Halsteil des Glasbehälters über ein biegsames Klebemittel innerhalb eines ringförmigen Hohlraums eines Griffs gehalten wird, der den Halsteil der Karaffe vollständig umgibt. Vergleiche die US-A-4,090,648. Weil der Griff und der Glasbehälter nur über das Klebemittel miteinander verbunden sind, das sich erweichen kann und beim Auftreten von Wärme verformt werden kann, besteht ein Bedürfnis an einem Verriegelungsmittel zwischen dem Glasbehälter und dem Handgriff, um diese Teile fest miteinander zu verbinden, wobei diese Verbindung auch durch das Erweichen und die Verformung, bedingt durch die Erwärmung nicht leiden soll.

Der Erfindung liegt daher die Hauptaufgabe zugrunde, eine neue und verbesserte Karaffe mit einem zum Ausgießen dienenden Handgriff vorzuschlagen, wobei der Handgriff fest mit einem Glasbehälter verbunden ist und wobei bei Temperaturänderungen der Glasbehälter sich ausdehnen und zusammenziehen kann. Weiterhin liegt der Erfindung die Aufgabe zugrunde, eine derartige Karaffe vorzuschlagen, bei der der Handgriff fest mit dem Glasbehälter verbunden ist und Längenänderungen, bedingt durch Temperaturänderungen, möglich sind. Es soll vermieden werden, daß sich der Handgriff löst, wenn er in stark erwärmtem Zustand belastet wird. Weiterhin liegt der Erfindung die Aufgabe zugrunde, eine derartige Karaffe vorzuschlagen, die mit einer Mindestanzahl von Bauteilen auskommt, wobei der Handgriff einfach mit dem Glasbehälter verbunden werden kann, wobei die Verbindung belastbar sein soll und dennoch den auftretenden Temperaturschwankungen standhält. Fernerhin liegt der Erfindung die Aufgabe zugrunde, eine derartige Karaffe so auszugestalten, daß der Handgriff fest mit der Kante des Glasbehälters verbunden ist, und zwar über mehrere Befestigungsmittel, die ringsum die Kante des Glasbehälters angeordnet sind und die bei Temperaturänderungen eine Verschiebung des Handgriffs bezüglich des Glasbehälters verhindern. Eine weitere erfindungsgemäße Aufgabe besteht darin, eine derartige Karaffe vorzuschlagen, die Verriegelungsmittel hat, um den Handgriff am Glasbehälter fest und sicher zu halten und abzudichten, wobei ebenfalls Temperaturänderungen aufgefangen werden. Schließlich liegt der Erfindung die Aufgabe zugrunde, eine kompakt und stabil konstruierte Karaffe vorzuschlagen, die leicht montiert werden kann, einfach und zuverlässig im Gebrauch ist und die auch preisgünstig hergestellt werden kann.

Weitere Aufgaben, Merkmale und Vorteile des Erfindungsgegenstandes ergeben sich auch aus der folgenden detaillierten Beschreibung der Erfindung.

Zur Lösung der erwähnten Aufgaben ist die Erfindung dadurch gekennzeichnet, daß der Griff eine ringförmige Aufnahme aufweist, in die die Kante des Glasbehälters mit Spiel paßt, wobei mehrere Befestigungsmittel in der Aufnahme vorgesehen sind, die sich an die Kante des Glasbehälters anlegen und den Griff an dem Glasbehälter um dessen Öffnung befestigen, und wobei ein biegsames Material in der Aufnahme vorgesehen ist, das den Griff an dem Glasbehälter abdichtet.

Die Befestigungsmittel bestehen aus mehreren Federklammern, wobei jede Federklammer aus einem Metallstreifen oder Metallband besteht, das im wesentlichen V-förmig gebogen ist. Die Beine oder Füße der Federklammer sind über ein abgerundetes Mittelteil miteinander verbunden. Die Federklammern werden über die Kante des Glasbehälters gelegt und dort befestigt, wobei ihre Füße an beiden Seiten der Kante vorgesehen sind. Die Federklammern werden voneinander beabstandet ringsum die Öffnung des Glasbehälters angeordnet. Der Aufnahmeraum des Handgriffs hat einander gegenüberliegende Flächen und jeder Fuß der Federklammer legt sich an jeweils eine dieser Flächen an, um den Handgriff am Glasbehälter zu befestigen. Wenigstens eine dieser Flächen der Aufnahme des Handgriffs kann mit einer Rippe versehen sein, während die Enden der Füße der Federklammern eine Kante aufweisen, mit der sie an der Rippe anliegen und dadurch die Federklammer fest am Griff befestigen. Die nach oben weisende Kante des Glasbehälters hat einen Wulst, während das Mittelteil jeder Federklammer entsprechend gebogen ist, so daß sich die Wulst darin einlegt. Wenn die Füße der Federklammern in der Aufnahme zusammengepreßt werden, wird das Mittelteil des betreffenden Federelements um die Wulst des Glasbehälters gesichert und dort festgehalten. Die Füße der Federelemente werden dadurch also fest im Handgriff befestigt.

Bei einer anderen Ausführungsform können die einander gegenüberliegenden Flächen des Aufnahmeraums des Handgriffs jeweils mit einer Vielzahl von benachbarten Rippen ausgerüstet sein, die zwischen sich Rillen für die Aufnahme der Endkanten der Beine der Federelemente ausbilden, wodurch die Federelemente innerhalb des Griffs befestigt werden und wodurch der Griff am Halsteil des Glasgefäßes verriegelt wird, so daß das Glasgefäß in der Aufnahme des Griffs gesichert befestigt wird.

Der Halsteil des Glasgefäßes kann auch mit Positioniermitteln zum Greifen und Halten der Federelemente an voneinander beabstandeten Stellen ringsum die Öffnung des Glasbehälters ausgerüstet sein. Die Positioniermittel können Vorsprünge von der Kante des Halsteils aufweisen, um jedes Federelement zu ergreifen und zu halten und um ein Versetzen der Federelemente längs der Kante und um die Öffnung des Behälters zu verhindern.

Um den Handgriff am Halsteil des Behälters abzudichten, ist ein nachgiebiges oder federndes Material innerhalb der ringförmigen Aufnahme des Handgriffs vorgesehen, das den Halsteil des Behälters und die Befestigungsmittel umgibt.

Erfindungsgemäß wird auch ein Verfahren zur Herstellung einer Karaffe unter Verwendung eines Glasbehälters mit einem Halsteil mit einer nach oben weisenden Kante und eines Griffs zum Ausgießen vorgeschlagen, wobei der Griff eine ringförmige Aufnahme aufweist, in die der Halsteil des Glasbehälters lose eingesetzt ist und in der mehrere Federelemente aufgenommen werden, und zwar über der nach oben weisenden Kante des Halsteils des Glasbehälters und voneinander beabstandet. Es wird ein nachgiebiges, flüssiges Dichtmaterial in die ringförmige Aufnahme des Griffs für den Glasbehälter eingegeben, es werden die Federelemente eingesetzt, wobei sie sich rings um den Halsteil des Glasbehälters befinden, und zwar in die ringförmige Aufnahme des Handgriffs und in Anlage an den einander gegenüberliegenden Flächen der ringförmigen Aufnahme, so daß der Halsteil des Glasbehälters sich in der Aufnahme befindet und dort positioniert wird und wobei er von den Federelementen am Handgriff verriegelt wird. Das federnde Dichtmaterial umgibt die Kante des Glasbehälters. Das Dichtmaterial verfestigt sich und bildet eine nachgiebige, flüssigkeitsdichte Abdichtung zwischen dem Handgriff und dem Glasbehälter aus.

Die Erfindung wird im folgenden anhand von Ausführungsbeispielen näher erläutert, aus denen sich weitere wichtige Merkmale ergeben. Es zeigt:

Fig. 1 - perspektivisch eine Ansicht einer Karaffe nach der Erfindung;

Fig. 2 - in einer auseinander gezogenen perspektivischen Darstellung die Karaffe, wobei nur der obere Teil des Glasbehälters gezeigt ist;

Fig. 3 - in vergrößertem Maßstab einen Schnitt längs der Linie 3 - 3 von Fig. 1;

Fig. 4 - einen Schnitt entsprechend Fig. 3 bei einer demgegenüber abgeänderten Ausführungsform;

Fig. 5 - perspektivisch eine abgeänderte Ausführungsform des Oberteils des Glasbehälters mit Befestigungsmitteln;

Fig. 6 - eine teilweise geschnittene Ansicht längs der Linie 6 - 6 von Fig. 5.

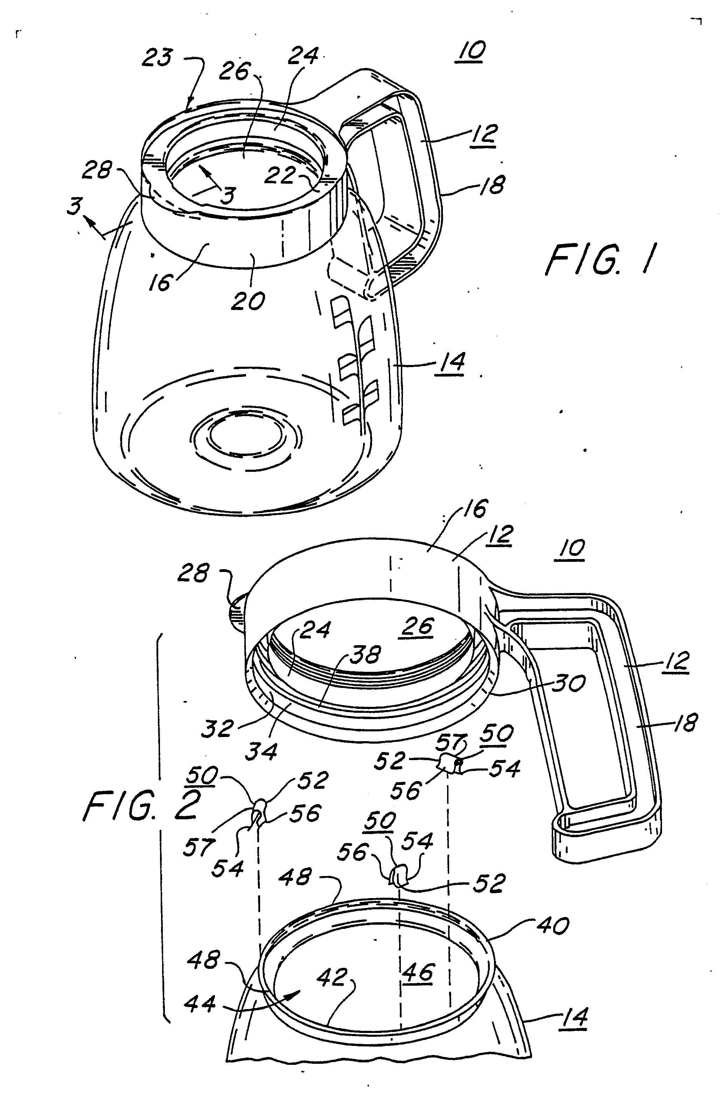

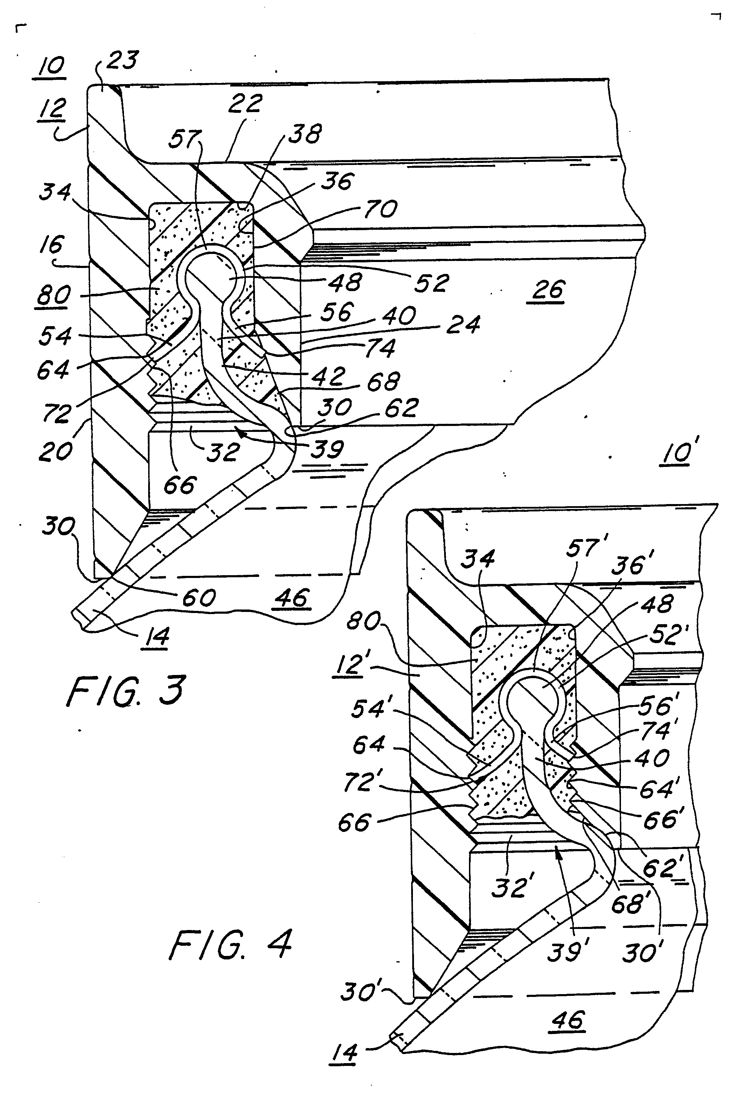

In den Fig. 1 bis 3 ist eine Karaffe 10 nach der Erfindung gezeigt. Die Karaffe 10 hat einen zum Ausgießen dienenden Griff 12, der vorzugsweise aus einem Kunststoffmaterial besteht, das wärmewiderstandsfähig ist. Außerdem weist die Karaffe einen Glasbehälter 14 auf. Der Griff 12 hat einen zylindrischen Teil 16 zur Befestigung am Glasbehälter 14 und einen Handgriff 18, der sich von einer Seite des zylindrischen Teils 16 nach außen und nach unten erstreckt. Der zylindrische Teil 16 hat eine zylindrische Seitenwand 20, eine Oberseite 22 und eine innere Zylinderwand 24, die eine Öffnung 26 ausbildet. Eine Lippe 28 erstreckt sich von der Zylinderfläche 20 und der Oberseite 22 zu einer Stelle gegenüber dem Handgriff 18. Die Oberseite 22 hat eine erhabene Umfangskante 23 zur Aufnahme und zum Halten eines zeichnerisch nicht dargestellten Deckels, der die Öffnung 26 verschließt. Die Unterseite 30 des Zylinderteils 16 des Handgriffs 12 hat eine ringförmige Aufnahme 32, die in den Fig. 2 und 3 dargestellt ist. Die ringförmige Aufnahme 32 wird durch einander gegenüberliegende Außen- bzw.Innenflächen 34, 36 und durch eine Oberseite 38 und eine Öffnung 39 definiert. Die Aufnahme 32 ist so definiert, daß die nach oben stehende Kante 40 (vgl. Fig. 2 und 3) des Halsteils 42 des Glasbehälters 14 mit Spiel in ihr aufgenommen werden kann.

Der Behälter 14 besteht vorzugsweise aus Glas, das erwärmte Substanzen aufnehmen kann, beispielsweise Kaffee, wobei die Substanzen mittels des Handgriffs 12 ausgegossen werden können. Der Halsteil 42 mit der nach oben weisenden Kante 40 bildet eine Öffnung 44 in das Innere 46 des Behälters 14 aus. Die nach oben stehende Kante 40 endet oben in einer Wulst 48.

Mehrere Befestigungsmittel 50, die metallische Federklammern 52 aufweisen, sind über die nach oben stehende Kante 40 gelegt, und zwar voneinander beabstandet ringsum die Öffnung 44 des Behälters 14. Jedes Federelement 52 besteht aus einem federnden Metallstreifen, der im wesentlichen V-förmig profiliert ist, wodurch einander gegenüberliegende erste und zweite Füße 54, 56 ausgebildet werden, die miteinander über ein gebogenes Mittelteil 57 verbunden sind. Wenn die Federklammern über die Kante 40 gelegt sind, so erstreckt sich der Fuß 54 der Federklammer 52 nach außen, gesehen vom Halsteil 42 des Behälters 14 aus, während sich der Fuß 56, der kürzer ist als der Fuß 54, vom Halsteil 42 aus gesehen nach innen erstreckt. Vgl. Fig. 3. Das gebogene Mittelteil 57 der Federklammern 52 entspricht der Wulst 48 und ist über die Wulst gelegt, und zwar an der Oberseite des Behälters 14, wodurch die Federklammern 52 am Halsteil 42 des Behälters 34 befestigt werden.

Bei der gezeigten Ausführungsform sind drei Federelemente 52 als Befestigungsmittel 50 der Karaffe 10 vorgesehen, über die der Handgriff 12 am Gefäß 14 befestigt wird, obgleich die Anzahl der Federelemente 52 je nach den jeweiligen Anforderungen auch sich ändern kann. Fig.2 zeigt, daß die Federelemente 52 voneinander gleichmäßig beabstandet auf die Kante des Behälters 14 aufgesetzt sind und zusammen mit der Kante 40 in die ringförmige Aufnahme 32 des Handgriffs 12 (vgl. Fig. 3) hineinragen. Die Öffnung der ringförmigen Aufnahme 32 ist so dimensioniert, daß die Kante 40 des Halsteils 42 des Behälters 34 frei in der Aufnahme aufgenommen werden kann, wodurch Belastungen des Halsteils 42 des Behälters 14 bei Temperaturänderungen verringert oder ganz ausgeschaltet werden. Um dies zu erreichen, reicht der Abstand zwischen der Außenwand 34 und der Innenwand 36 aus, um einen Kontakt mit der Kante 40 des Behälters 14 zu vermeiden. Der Betrag, um den die Kante 40 in der ringförmigen Aufnahme 32 aufgenommen wird, wird durch den Kontakt begrenzt, der vom Boden 30 des Handgriffs 32 mit den Innen- und Außenflächen des Behälters an den Stellen 60, 62 hergestellt wird. Dadurch wird das Einsetzen des Halsteils 40 in die Aufnahme 32 begrenzt und verhindert, daß die Oberseite 38 der Aufnahme 32 mit dem Halsteil 40 Berührung hat.

Die Außenfläche 34 der Aufnahme 32 hat eine oder mehrere Rillen 64 und Rippen 66, während die gegenüberliegende Innenfläche 36 eine geneigte Fläche 68 am Boden hat, die einen Winkel von beispielsweise 20° mit der oberen Vertikalwand 70 einschließt, wodurch ein vergrößerter Zugang 39 zur ringförmigen Aufnahme 32 ausgebildet wird, der sich nach oben nach und nach verjüngt.

Der Handgriff 12 ist am Halsteil 42 des Behälters 14 über die Federklammern 52 der Befestigungsmittel fest gehalten, wie in Fig. 3 gezeigt. Die Füße 54, 56 jedes Federelements 52 legen sich an die Innenwand 34 bzw. an die Außenwand 36 der ringförmigen Aufnahme 32 an. Die Kante 72 am Ende der Füße 54 der Federelemente 52 wird in einer Rille 64 aufgenommen und legt sich an eine Rippe 66 in der Außenfläche 34 an, während ihre Kante 74 am Ende des anderen Fußes 56 sich an die Fläche 68 der Innenfläche 36 anlegt. Der Kontakt der Federelemente 52 an deren Kanten 72, 74 verhindert eine Verschiebung in der ringförmigen Aufnahme 32 und hält das gebogene Mittelteil 57 jedes Federelements 52 um den Wulst 48 des Behälters 14, so daß der Handgriff 12 sicher am Behälter 14 befestigt wird.

Die Temperaturänderungen der Flüssigkeit im Behälter 14 und das Ausgießen heißer Flüssigkeiten durch den Handgriff 12 mit Ausguß, wodurch eine Expansion und Kontraktion des Behälters und/oder des Handgriffs 12 bewirkt wird, belastet nicht den Behälter 14 über den Handgriff 12. Dies beruht darauf, daß es keine direkte Verbindung zwischen dem Handgriff 12 und dem Behälter 14 gibt. Die Federklammern 52 ermöglichen eine Relativbewegung der Kante 40 in Bezug auf den Handgriff 12, und zwar innerhalb des ringförmigen Aufnahmeraums 32, wobei die Relativbewegungen von Temperaturänderungen hervorgerufen werden. Diese Bewegungen werden durch die Federwirkung der Federklammern 52 aufgenommen, ohne daß dabei ein Bauteil unzulässig belastet wird.

Um eine flüssigkeitsdichte Abdichtung zwischen dem Handgriff 12 und dem Behälter 14 auszubilden, ist ein nachgiebiges oder federndes Abdichtmaterial 80 in der ringförmigen Aufnahme 32 vorgesehen, welches Abdichtmaterial den Halsteil 42 und dessen nach oben weisende Kante 40 des Behälters einbettet und auch die Federklammern 52, die sich in der ringförmigen Aufnahme befinden. Weil die Befestigungsmittel 50 dazu dienen, den Handgriff am Behälter 14 zu verriegeln und eine Verschiebung zu verhindern, beeinflußt das Aushärten oder eine Zerstörung des federnden Abdichtmaterials 80, hervorgerufen durch Wärme, nicht die sichere Befestigung des Handgriffs 12 am Behälter 14.

Fig. 4 zeigt eine Schnittansicht ähnlich Fig. 3, aber bei einer abgeänderten Ausführungsform eines Handgriffs 12' einer Karaffe 10'. Der Handgriff 12' entspricht im wesentlichen dem Handgriff 12, ausgenommen daß die ringförmige Aufnahme 32' eine Reihe von Rillen 64' hat, und zwar am unteren Teil ihrer Fläche 36', ähnlich den Rillen und Kanten 64, 66 an der gegenüberliegenden Außenfläche 34 der Aufnahme 32'. Eine abgewinkelte Fläche 68' ist auch am unteren Teil der Innenfläche 36' vorgesehen, um einen verbreiterten Zugang 39' zur Aufnahme 32' auszubilden und um den Behälter 14 an der Stelle 62' zu berühren, wie dies auch bezüglich des Handgriffs 12 der Fall ist. Die Federklammern 52' sind auch über die nach oben stehende Kante 40 des Behälters 14 gelegt, wobei deren gebogene Mittelteile 57' fest um die Wulst 48 gelegt sind und die Kante 72' der Federbeine 54' in einer Rille 64 aufgenommen sind und von einer Rippe 66 in der Außenfläche 34 gehalten werden. Die anderen Füße 56', die kürzer sind als die Füße 54', haben Kanten 74', die sich an eine Rippe 66' der Innenfläche 36' der Aufnahme 32' anlegen. Die Anlage der Füße 54' und 56' der Federelemente oder Federklammern 52' hält diese fest in der Aufnahme 32', während deren Mittelteil 57' fest um die Wulst 58 des Behälters 14 gelegt sind, so daß der Behälter mittels der Federklammern 52' am Handgriff 12' befestigt ist. Wie im Zusammenhang mit dem Handgriff 12 beschrieben, sichern die Federklammern 52' den Handgriff 12' am Behälter 14 und verbinden beide Teile miteinander. Sie ermöglichen eine Expansion und Kontraktion der Bauteile. Das federnde Dichtmaterial 80 ist auch hier in der Aufnahme 32' vorgesehen und bildet eine flüssigkeitsdichte Abdichtung zwischen dem Behälter 14 und dem Handgriff 12' aus.

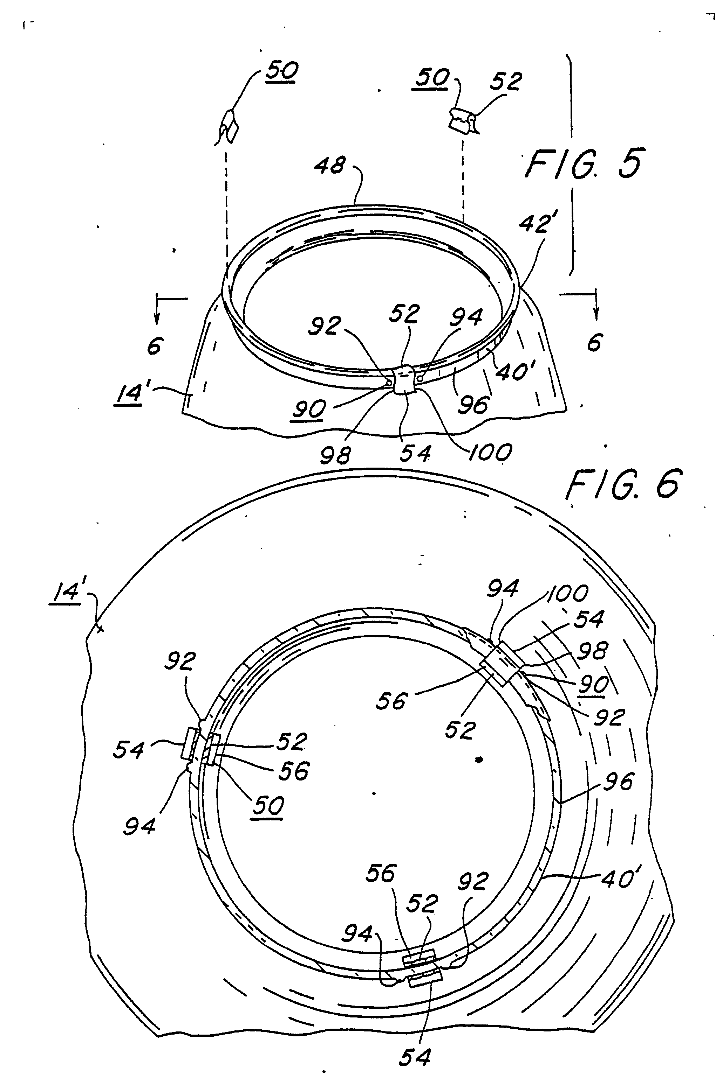

Die Fig. 5 und 6 zeigen eine abgeänderte Ausführungsform eines Behälters 14'. Der Behälter 14' entspricht im wesentlichen dem Behälter 14, ausgenommen daß die nach oben stehende Kante 40' des Halsteils 42' mit Positioniermitteln 90 für jede Federklammer 52 der Befestigungsmittel 50 versehen ist. Die Positioniermittel 90 weisen in der dargestellten Form eine Vielzahl von Sätzen von Vorsprungspaaren 92, 94 auf, die sich von der Außenfläche 96 der Kante 40' des Behälters 14 nach außen erstrecken. Ein Satz Vorsprünge 92, 94 ist für jede Federklammer 52 vorgesehen, die um die nach oben weisende Kante 40' des Behälters 14' gelegt ist. Die Vorsprünge 92, 94 jedes Paares sind voneinander beabstandet, so daß sie zwischen sich entgegengesetzte Kanten 98, 100 eines Fußes 54 einer Federklammer 52 aufnehmen und sich an diese anlegen. Die Kanten 98, 100 erstrecken sich nahe der Fläche 96 der Kante 40', wie in den Fig. 5 und 6 gezeigt. Die Positioniermittel 90 dienen dazu, jede Federklammer 52 am Halsteil 42' beabstandet voneinander aufzunehmen und zu halten. Dadurch wird also der Handgriff 12 oder 12' sicher am Behälter 14 befestigt, und zwar über die Federklammern 52, wobei die Positioniermittel 90 Widerstand gegen ein Verdrehen des Handgriffs 12, 12' bezüglich des Halsteils 42' des Behälters 14' leisten. Die Befestigungsmittel 50, die von den Federklammern 52 ausgebildet sind, verhindern auch ein seitliches Verschieben des Handgriffs 12, 12' bezüglich des Behälters 14 oder 14', beruhend auf dem Gewicht der Flüssigkeit im Behälter, wenn die Karaffe 10 oder 10' zum Ausgießen ihres Inhalts am Handgriff 18 gehalten wird.

Das erfindunggemäße Verfahren zur Herstellung einer derartigen Karaffe verwendet einen Glasbehälter mit einem Halsteil mit einer nach oben stehenden Kante und einem zum Ausgießen dienenden Handgriff mit einer ringförmigen Aufnahme, in die das Halsteil des Behälters lose aufgenommen ist. Hierzu sind mehrere Federelemente 52 eines Befestigungsmittels 50 voneinander beabstandet über die Kante 40 gelegt, wie in den Fig. 2 und 5 gezeigt. Ein federndes Dichtmaterial wird in flüssigem Zustand in die ringförmige Aufnahme 32 des Handgriffs 12 oder in die ringförmige Aufnahme 32' des Handgriffs 12' eingegeben. Die ringförmige Aufnahme des Handgriffs 12 fluchtet mit der Kante 40 des Behälters 14, während die Federklammern 52 und der Hals 42 des Behälters 14 in die ringförmige Aufnahme 52' des Handgriffs 12 eingesetzt werden.

Die Federelemente befinden sich nunmehr über der Kante 40 des Behälters 14 und werden in die Aufnahme 32 durch deren Zugang 39 bewegt, wobei die Füße 54, 56 sich an der Außenwand 34 bzw. Innenwand 36 der Aufnahme 32 anlegen. Beim Handgriff 12 legt sich der Fuß 54 jedes Federelements 52 an der Reihe der Rillen 64 und Kanten 66 an, während das Ende 56 sich an den geneigten Teil 68 der Innenwand 36 anlegt. Wenn die Kante 40 vollständig in die Aufnahme 32 aufgenommen ist, so daß der Behälter 14 den unteren Teil 30 des Handgriffs 12 an den Stellen 60, 62 berührt, dann sitzen die Federklammern 52 so, daß ihre Enden 54 jeweils sich an eine Rippe 66 anlegen, während ihre Beine 56 dadurch gespannt werden, daß sie längs der geneigten Fläche 68 gleiten. Dadurch werden die Federklammern 52 in der ringförmigen Aufnahme 32 verriegelt und die Beine 54, 56 werden zusammengepreßt, so daß die Mittelteile 57 der Federklammern 52 den Wulst 48 des Behälters 14 fest umgreifen und daran gehalten werden.

Das flüssige Abdichtmaterial 80 verfestigt sich jetzt und ergibt eine nachgiebige Flüssigkeitsabdichtung zwischen dem Handgriff 12 und dem Behälter 14.

Der einfache Handgriff, den Hals des Behälters in die ringförmige Aufnahme des Handgriffs unter Anwesenheit eines flüssigen, nachgiebigen oder federnden Abdichtmaterials einzusetzen, das dann verfestigt wird, ergibt die Montage der Karaffe 10. Es ist also lediglich eine Mindestanzahl an Fertigungsschritten notwendig und es werden sehr wenige Bauteile verwendet für die Herstellung einer Karaffe mit einem Handgriff mit Ausguß, welche Teile fest mit dem Behälter verbunden sind, wobei durch Temperaturänderungen bedingte Längenänderungen der Bauteile aufgenommen werden. Diese Änderungen werden durch die Federklammern aufgenommen.

Die Montage des Handgriffs 12 oder des Handgriffs 12' am Behälter 14 oder 14' wird, wie vorstehend beschrieben, durchgeführt. Der Handgriff 12' hat Rillen und Rippen längs den einander gegenüberliegenden Innen- und Außenflächen 34', 36' der Aufnahme 32', an die sich die Füße 54', 56' der Federklammern 52' anlegen, während der Behälter 14' Positioniermittel aufweist, in denen die Federklammern 52 voneinander beabstandet ringsum die Kante 40' des Behälters 14 gehalten werden. Auch hier wird also die Karaffe 10' mit einem Handgriff 12' und einem Behälter 14 oder 14' montiert, wobei die Bauteile über die Federklammern 52' fest aneinander befestigt sind.

Erfindungsgemäß wird also eine Karaffe mit einem Handgriff und einem Ausguß und mit einem Behälter vorgeschlagen, die miteinander über Federklammern verbunden sind, worüber der Hals des Behälters und der Handgriff miteinander fest verbunden werden. Die Federklammern sind biegsam und nehmen dadurch die thermischen Längenänderungen der Bauteile auf. Die thermischen Längenänderungen beruhen auf dem Erwärmen und der Abgabe heißer Flüssigkeiten, beispielsweise von Kaffee. Das Auftreten zu großer Kräfte, die die Karaffe beschädigen könnten, wird dadurch also vermieden. Erfindungsgemäß können die Bauteile für die Herstellung der Karaffe auch schnell und sorgsam montiert werden.

Vorstehend wurden lediglich Ausführungsbeispiele erläutert, auf die die Erfindung nicht beschränkt ist.

**Ansprüche**

1. Karaffe (10,10') mit einem mit ihr verbundenen Griff (12,12'), ferner mit einem Glasbehälter (14,14') mit einem Halsteil (42,42') mit einer nach oben weisenden Kante (40,40'), die eine Öffnung (44) ausbildet,
**dadurch gekennzeichnet,** daß der Griff (12,12') eine nach unten offene ringförmige Aufnahme (32,32') aufweist, in die die Kante (40,40') des Glasbehälters (14,14') mit Spiel paßt, wobei mehrere Befestigungsmittel (52,52') in der Aufnahme (32,32') vorgesehen sind, die sich an die Kante (40,40') des Glasbehälters (14,14') anlegen und den Griff (12,12') an dem Glasbehälter (14,14') um dessen Öffnung (44) befestigen und wobei ein Dichtungsmaterial (80) in der Aufnahme (32,32') vorgesehen ist, das den Griff (12,12') an dem Glasbehälter (14,14') abdichtet.

2. Karaffe nach Anspruch 1, dadurch gekennzeichnet, daß die Befestigungsmittel mehrere Federklammern (52,52') aufweisen.

3. Karaffe nach Anspruch 2, dadurch gekennzeichnet, daß die Federklammern (52,52') aus im wesentlichen V-förmig profiliertem Federbandmaterial bestehen, wobei eine erster und ein zweiter Fuß (54,54', 56,56') jeweils miteinander über einen gerundeten Mittelteil (57,57') verbunden sind.

4. Karaffe nach Anspruch 2 oder 3, dadurch gekennzeichnet, daß mehrere Federklammern (52,52') über die Kante (40,40') des Glasbehälters (14,14') gelegt sind, wobei ihre Füße (54,54', 56,56') zu gegenüberliegenden Seiten der Kante (40,40') weisen und die Federklammern (52,52') voneinander beabstandet um die Öffnung (44) des Glasbehälters (14,14') angeordnet sind.

5. Karaffe nach Anspruch 3 oder 4, dadurch gekennzeichnet, daß die Aufnahme (32,32') des Handgriffes (12,12') einander gegenüberliegende Flächen (34,34', 36,36') aufweist, wobei jeder Fuß (54,54', 56,56') der Federklammer (52,52') sich an eine dieser Flächen (34,34', 36,36') anlegt, um den Handgriff (12,12') am Glasbehälter (14,14') zu befestigen.

6. Karaffe nach Anspruch 5, dadurch gekennzeichnet, daß wenigstens eine der einander gegenüberliegenden Flächen (34,34', 36,36') der Aufnahme (32,32') des Handgriffes (12,12') mit einer Rippe (66,66') versehen ist, wobei die Enden der Füße (54,54', 56,56') der Federklammern (52,52') eine Kante (72,72', 74,74') zur Anlage an die Rippe (66,66') haben, um das Federelement (52,52') am Handgriff (12,12') festzuhalten.

7. Karaffe nach einem der Ansprüche 2 bis 6, dadurch gekennzeichnet, daß die nach oben stehende Kante (40,40') des Glasbehälters (14,14') eine Wulst (48) aufweist, wobei das Mittelteil (57,57') jeder Federklammer (52,52') derart gebogen ist, daß die Wulst (48) darin aufgenommen werden kann, wobei ferner die Füße (54,54', 56,56') der Federelemente (52,52') innerhalb einer Rille (64,64') des Handgriffes (12,12') aufgenommen werden, wodurch das Mittelteil (57,57') der Federklammern (52,52') an die Wulst (48) angepreßt wird, um das Federelement (52,52') dort festzuhalten und damit die Füße (54,54', 56,56') der Federklammern (52,52') den Handgriff (12,12') fest ergreifen.

8. Karaffe nach einem der Ansprüche 2 bis 7, dadurch gekennzeichnet, daß wenigstens eine der einander gegenüberliegenden Flächen (34,34', 36,36') der Aufnahme (32,32') des Handgriffes (12,12') eine Vielzahl von benachbarten Rippen (66,66') und dazwischenliegende Rillen (64,64') hat, wobei eine Kante (72,72', 74,74') eines Fußes (54,54', 56,56') jeder Federklammer (52,52') in eine Rille (64,64') eingreift und sich an eine der Kanten (72,72', 74,74') anlegt, so (daß die Federklammer (52,52') im Handgriff (12,12') fest gesichert wird und der Handgriff (12,12') am Hals (42) das Glasbehälters (14,14') verriegelt wird, wobei ferner der Hals (42) des Glasbehälters (14,14') in der Aufnahme (32,32') des Handgriffes (12,12') sicher aufgenommen ist.

9. Karaffe nach Anspruch 8, dadurch gekennzeichnet, daß die Rippen (66,66') und Rillen (64,64') an der Fläche der ringförmigen Aufnahme (32,32') des Handgriffes (12,12') durch eine Vielzahl von benachbarten ringförmigen Rillen in deren Oberfläche ausgebildet sind, wobei die Vielzahl der Rippen und Rillen Mittel zum Justieren der Lage des Halsteiles (40) des Glasbehälters (14,14′) in der ringförmigen Aufnahme (32,32′) des Handgriffes (12,12′) ausbildet.

10. Karaffe nach einem der Ansprüche 2 bis 9, dadurch gekennzeichnet, daß jede der einander gegenüberliegenden Flächen (34,34′, 36,36′) der Aufnahme (32,32′) des Handgriffes (12,12′) eine Vielzahl von benachbarten ringförmigen Rippen (66,66′) und dazwischenliegenden Rillen (64,64′) aufweist, wobei die Kante (72,72′, 74,74′) jedes Fußes (54,54′, 56,56′) der Federklammern (52,52′) in einer Rille (64,64′) einer Fläche aufgenommen ist und sich an entsprechende Kanten anlegt, um jede Federklammer (52,52′) im Handgriff (12,12′) zu sichern und um den Handgriff (12,12′) am Hals (42) des Glasbehälters (14,14′) zu verriegeln, der in der Aufnahme (32,32′) des Handgriffes (12,12′) positioniert und festgehalten ist.

11. Karaffe nach einem der Ansprüche 1 bis 10, dadurch gekennzeichnet, daß der Hals (42) des Glasbehälters (14, 14′) mit Positioniermitteln versehen ist, um die Befestigungsmittel an voneinander beabstandeten Stellen rings um die Öffnung (26) des Glasbehälters (14,14′) zu greifen und zu halten.

12. Karaffe nach Anspruch 11, dadurch gekennzeichnet, daß die Positioniermittel des Glasbehälters (14′) Vorsprünge (92,94) von der Kante des Halsteiles aufweisen, um die Befestigungsmittel (52) zu greifen und zu halten.

13. Karaffe nach einem der Ansprüche 4 bis 12, dadurch gekennzeichnet, daß das Halsteil (42) des Glasbehälters (14,14′) mit Haltemitteln versehen ist, die eine Vielzahl von Vorsprüngen von der Kante aufweisen, jeweils zum Greifen der Federelemente (52,52′) und zum Halten der Federelemente (52,52′) voneinander beabstandet rings um die Öffnung (26) des Behälters (14,14′).

14. Karaffe nach Anspruch 13, dadurch gekennzeichnet, daß die Haltemittel eine Vielzahl von Paaren von beabstandeten Vorsprüngen (92,94) von der Kante des Behälters (14,14′) aufweisen, jeweils um zwischen sich eine der Federklammern (52) aufzunehmen und zu halten, um deren Verschiebung zu verhindern, ebenso die Verschiebung des Handgriffes (12,12′) rings um die Öffnung (26) des Glasbehälters (14,14′).

15. Karaffe nach einem der Ansprüche 7 bis 14, dadurch gekennzeichnet, daß der Halsteil (42) des Glasbehälters (14,14′) mit einer Vielzahl von Paaren von beabstandeten Vorsprüngen (92,94) versehen ist, die sich nach außen von der Kante des Glasbehälters (14,14′) erstrecken, wobei jedes Paar der Vorsprünge (92,94) zwischen sich jeweils eines der Federelemente (52) an deren beabstandeten Stellen rings um die Öffnung (26) des Glasbehälters (14) aufnimmt und hält, wobei ferner die Paare der beabstandeten Vorsprünge (92,94) sich von der Kante des Behälters (14) nach außen erstrecken und ein Verschieben der Federklammern (52) sowie ein Verschieben des Handgriffes (12) rings um die Öffnung (26) des Behälters (14) verhindern.

16. Verfahren zur Herstellung einer Karaffe unter Verwendung eines Glasbehälters mit einem Halsteil und mit einer nach oben weisenden Kante sowie eines Griffes zum Ausgießen, **dadurch gekennzeichnet,**
daß der Griff eine nach unten ringförmige Aufnahme (32, 32′) aufweist, in dem der Halsteil (42) des Glasbehälters (14,14′) mit Spiel aufgenommen wird, daß

a) eine Vielzahl von Federelementen (52,52′) über die nach oben weisende Kante (40) des Halsteiles (42) des Glasbehälters (14,14′) gelegt und voneinander beabstandet angeordnet wird,

b) ein flüssiges, federndes oder nachgiebiges Abdichtmaterial (80) in die ringförmige Aufnahme (32,32′) des Handgriffes (12,12′) des Glasbehälters (14,14′) eingegeben wird,

c) die um das Halsteil (42) des Glasbehälters angeordneten Federklammern (52,52′) in die ringförmige Aufnahme (32,32′) des Handgriffes (12,12′) eingesetzt werden und sich an die gegenüberliegenden Flächen (34,34′, 36,36′) der ringförmigen Aufnahme (32,32′) anlegen, so daß das Halsteil (42) des Glasbehälters (14,14′) in die Aufnahme (32,32′) hineinragt und dort positioniert wird und mittels der Federklammern (52,52′) am Handgriff (12,12′) verriegelt wird, wobei das Abdichtmaterial (80) das Halsteil (42) des Glasbehälters (14,14′) umgibt, und

d) daß das Abdichtmaterial (80) sich verfestigt und eine nachgiebige Flüssigkeitsdichtung zwischen dem Handgriff (12,12′) und dem Glasbehälter (14,14′) ausbildet.

17. Verfahren nach Anspruch 16, dadurch gekennzeichnet, daß die Kante (40) des Halsteiles (42) des Glasbehälters (14,14′) mit einer Vielzahl von voneinander beabstandeten Paaren von Vorsprüngen (92,94) versehen wird, die sich um die Öffnung (26) erstrecken und daß beim Verfahrensschritt a) jedes der Vielzahl der Federelemente (52,52′) zwischen jeweiligen Paaren von Vorsprüngen (92,94) des Glasbehälters (14) angeordnet wird, um diese in ihrer Position zu halten und um zu verhindern, daß sie um die Öffnung (26) des Glasbehälters (14) verschoben werden.

FIG. 1

FIG. 2

FIG. 3

FIG. 4

FIG. 5

FIG. 6